Europäisches Patentamt

(19) European Patent Office

Office européen des brevets

(11) Publication number : **0 342 543 B1**

(12) # EUROPEAN PATENT SPECIFICATION

(45) Date of publication of patent specification :
25.09.91 Bulletin 91/39

(21) Application number : **89108598.7**

(22) Date of filing : **12.05.89**

(51) Int. Cl.⁵ : **B60K 13/00, F16L 37/00**

(54) **Device for the connection of an air intake pipe to the air filter of a motor vehicle.**

(30) Priority : **17.05.88 IT 5315888 U**

(43) Date of publication of application :
**23.11.89 Bulletin 89/47**

(45) Publication of the grant of the patent :
**25.09.91 Bulletin 91/39**

(84) Designated Contracting States :
**DE ES FR GB IT NL SE**

(56) References cited :
**AT-B- 338 113**
**FR-A- 2 442 737**
**GB-A- 2 055 719**
**US-A- 4 378 945**

(73) Proprietor : **IVECO FIAT S.p.A.**
**Via Puglia 35**
**I-10156 Torino (IT)**

(72) Inventor : **Rolfo, Gian Piero**
**Corso Salvemini 65 B**
**I-10095 Grugliasco (IT)**
Inventor : **Savio, Piero**
**Via Boito 1**
**I-10040 Borgaretto (IT)**

(74) Representative : **Jorio, Paolo et al**
**STUDIO TORTA Società Semplice Via Viotti 9**
**I-10121 Torino (IT)**

## Description

The present invention relates to a device for connecting an air intake pipe to the inlet of an industrial vehicle air filter.

On industrial vehicles, the engine and relative accessory components are usually housed underneath the cab, which can usually be tilted forward to enable access to the same. Such vehicles are also usually fitted with an air intake pipe, known as a "snorkel", having its inlet located high enough off the ground to ensure solid-free air intake. Said snorkel is secured vertically to the back of the cab, with its bottom end connected to the inlet of an air filter integral with the vehicle frame. Provision must therefore be made for a snorkel-filter connecting device which is both easily removable, for enabling forward tilting of the cab, and also provides for relative displacement of the two parts, to compensate for rolling vibration.

Known devices of the aforementioned type substantially consist of an elastomeric bellows type coupling having its top end connected permanently to the snorkel, and a bottom end designed to fit on to the filter inlet when the cab is lowered, and which may be released when the cab is tilted forward.

A major drawback of known devices of the aforementioned type is that, when the cab is tilted forward, the bellows "slumps" under its own weight, thus requiring manual fitting when the cab is lowered back down and the coupling reconnected to the filter inlet.

Moreover, the elastic characteristics of the bellows eventually deteriorate, thus impairing sealing performance between the bellows and the filter inlet when the bellows is extended.

The aim of the present invention is to provide a device for connecting an air intake pipe to the inlet of a motor vehicle air filter, designed to overcome the aforementioned drawbacks typically associated with known types of devices.

With this aim in view, according to the present invention, there is provided a device for connecting an air intake pipe to the air filter of a motor vehicle, said filter being supported by the vehicle frame, and said intake pipe being supported by the vehicle cab, designed to move, in relation to said frame, between a first normal operating position and a second forward-tilting position ; said device comprising a bellows type coupling connected at the top end to said intake pipe, and connectable at the bottom end to the inlet of said filter; characterised by the fact that it comprises elastic means acting on said bottom end for maintaining contact between said bottom end and said inlet of said filter when said cab is set to said first position ; and means, connected to said cab, for guiding said bottom end, and comprising means for determining a given stop position of said bottom end, by virtue of said elastic means, when said cab is set to said second position.

The dependent claims refer to further developments in line with the invention according to claim 1. Two preferred non-limiting embodiments of the present invention will be described by way of example with reference to the accompanying drawings, in which :

Fig. 1 shows a partial, schematic side view of an industrial vehicle featuring the device according to the present invention ;

Fig. 2 shows a partial, schematic side view of the Fig. 1 vehicle with the cab tilted forward ;

Fig. 3 shows a partially-sectioned front view of a first embodiment of the device according to the present invention ;

Fig. 4 shows a partially-sectioned top plan view of the Fig. 3 device ;

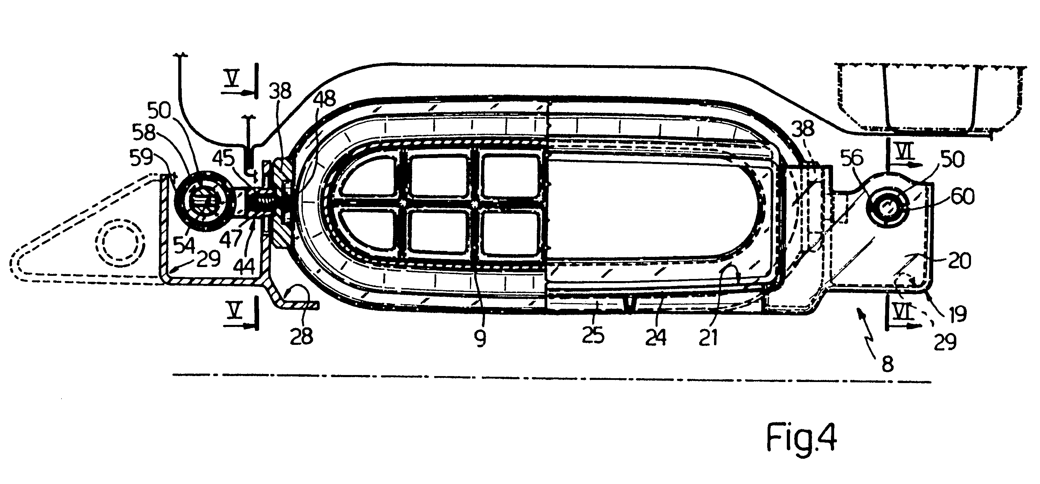

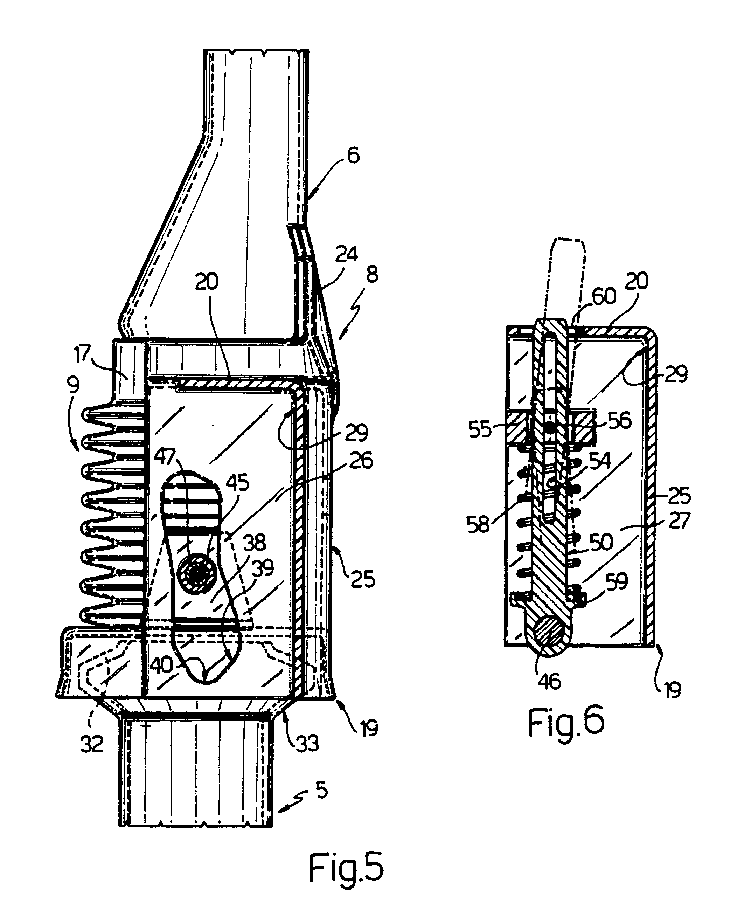

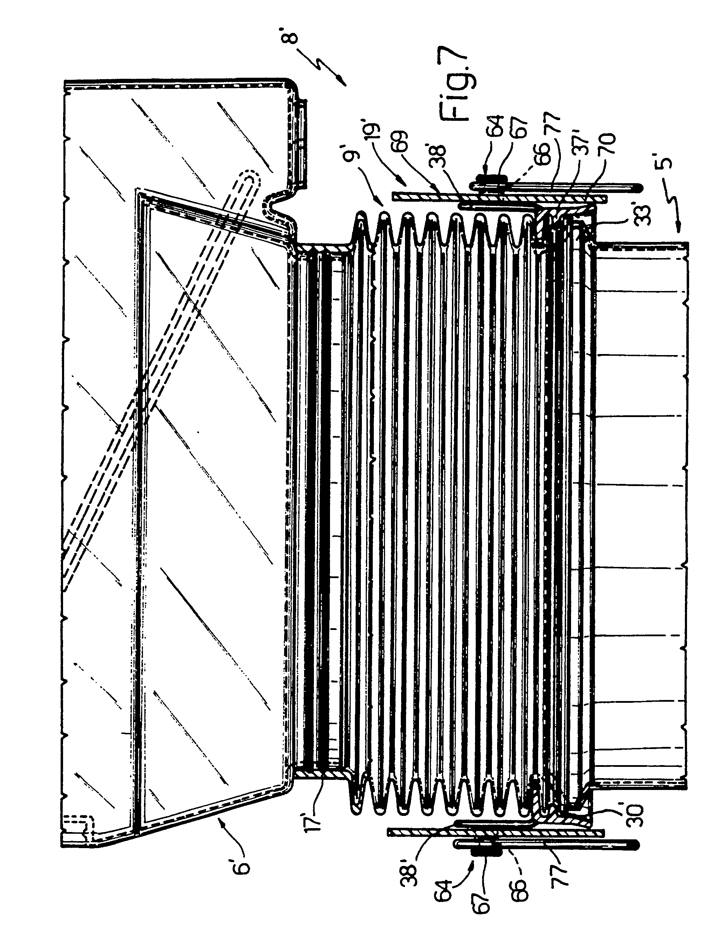

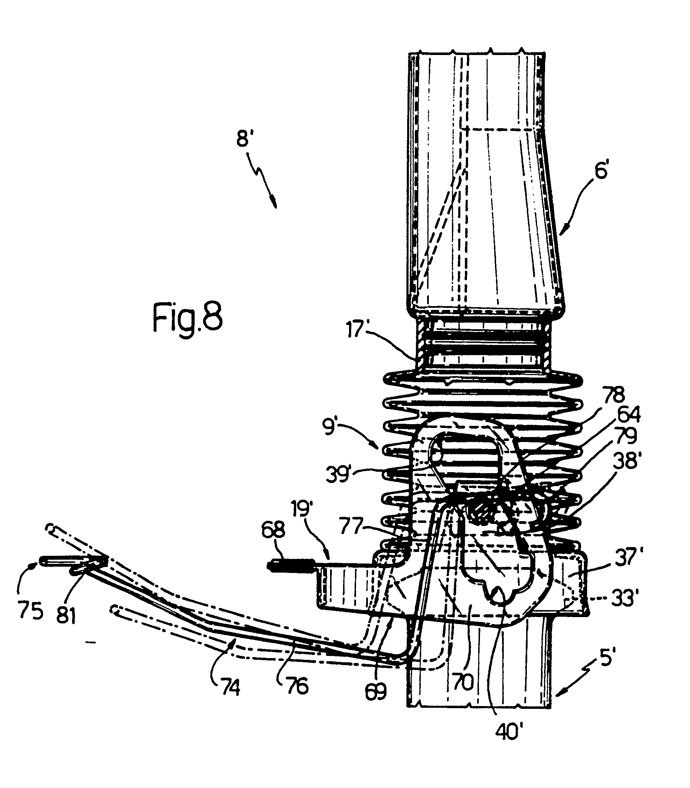

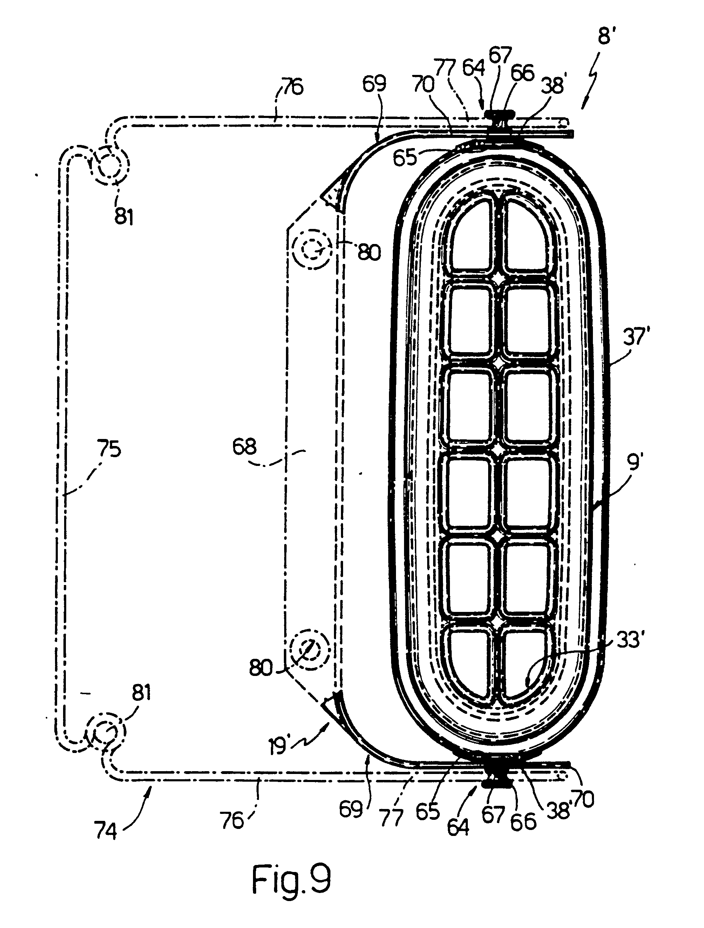

Fig.s 5 and 6 show respective sections along lines V-V and VI-VI in Fig. 4 ;

Fig.s 7, 8 and 9 show front, side and top plan views respectively of a second embodiment of the present invention.

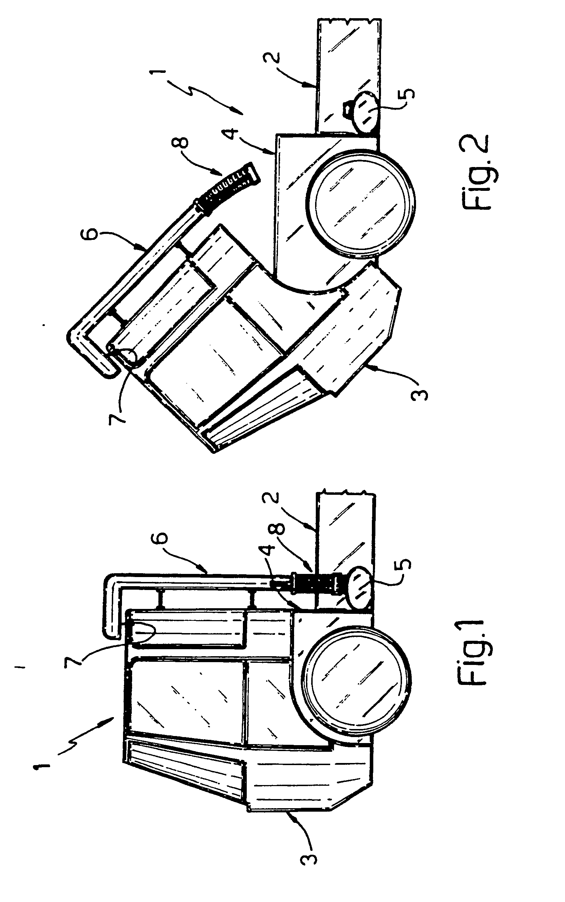

Number 1 in Fig.s 1 and 2 indicates an industrial vehicle having a frame 2 and a cab 3. A powerplant 4 is secured to frame 2 underneath cab 3, which is designed to tilt forward as shown in Fig. 2, for enabling access to power-plant 4. Powerplant 4 comprises, in particular, any known type of filter 5 for filtering air intake by the engine. To the back of cab 3 is fitted a vertical pipe or "snorkel" 6 having an air inlet 7 on the top end, and the bottom end of which presents a device 8 for connection to air filter 5. When cab 3 is in the normal position (Fig. 1), device 8 connects filter 5 to snorkel 6, thus enabling air intake from over the top of the cab and so preventing solid particles suspended in the air from entering filter 5. When cab 3 is tilted forward (Fig. 2), device 8 is released from filter 5 and moved forward together with cab 3.

Fig.s 3 to 6 show a first embodiment of device 8 according to the present invention.

Said device 8 comprises a tubular, corrugated bellows type coupling 9, hereinafter referred to simply as "bellows 9", conveniently formed from elastomeric material, having an oblong cross-section, and fitted to an oblong-section bottom opening 10 on snorkel 6. For this purpose, an edge 14 of said opening 10 presents a pair of peripheral teeth 15 engaging respective grooves 16 inside an end portion 17 of bellows 9 fitted on to edge 14.

Snorkel 6 is fitted, by means of a number of bolts 18, with a complex-shaped guide element 19. Said element 19 substantially comprises a top wall 20 defining a recess 21 loosely housing said end portion 17 of bellows 9, one end of which forms a flange 24 for assembly to snorkel 6 by means of said bolts 18. From top wall 20 there extend, in integral manner, a front wall 25 facing bellows 9, and two pairs of side walls 26, 27 spaced apart and located on opposite sides of bellows 9 in such a manner as to define a center compartment 28 housing bellows 9, and two side compartments 29 between said walls 26 and 27.

Bellows 9 terminates at the bottom in an edge 30 having a substantially conical inner surface 31 designed to cooperate with a matching conical surface 32 on inlet 33 of filter 5 ; and a pair of annular outer lips 35 designed to mate with respective inner lips 36 on a rigid collar 37 fitted on to said edge 30. From collar 37, two trapezoidal projections 38 extend upwards on opposite sides of bellows 9, and therefore facing respective side walls 26. Facing said projections 38, walls 26 present respective shaped openings 39 slightly inclined vertically and widest at the top and bottom ends. At the bottom end, said openings 39 present a substantially semicircular recess 40.

Device 8 comprises a pair of substantially L-shaped supporting elements 44 defining at their respective ends a hollow pin 45 and a solid cylindrical pin 46 having their axes substantially horizontal and parallel to each other. Said pin 45 houses a cylindrical, internally-threaded bush 47.

By means of respective screws 48 screwed into bushes 47, said supporting elements 44 are connected to projections 38, and extend downwards inside respective compartments 29 housing respective substantially vertical rods 50. Each rod 50 presents, on its bottom end, a through transverse hole housing pin 46 of a respective supporting element 44, and a longitudinal through opening 54 extending from the center portion to practically the top end of rod 50. Rods 50 are designed to slide, in radially slack manner, inside respective annular guide bushes 55 extending integrally from walls 27, and are secured to the same via respective pins 56 fitted inside transverse holes 57 of bushes 55 and engaging respective openings 54 of rods 50.

Said rods 50 are held down by respective helical springs 58 wound about the same and compressed between said bushes 55 and respective annular flanges 59 formed integral with rods 50 close to pins 46. Top wall 20 of guide element 19 presents a pair of holes 60 enabling upward excursion of rods 50 as described in detail later on.

Device 8 operates as follows.

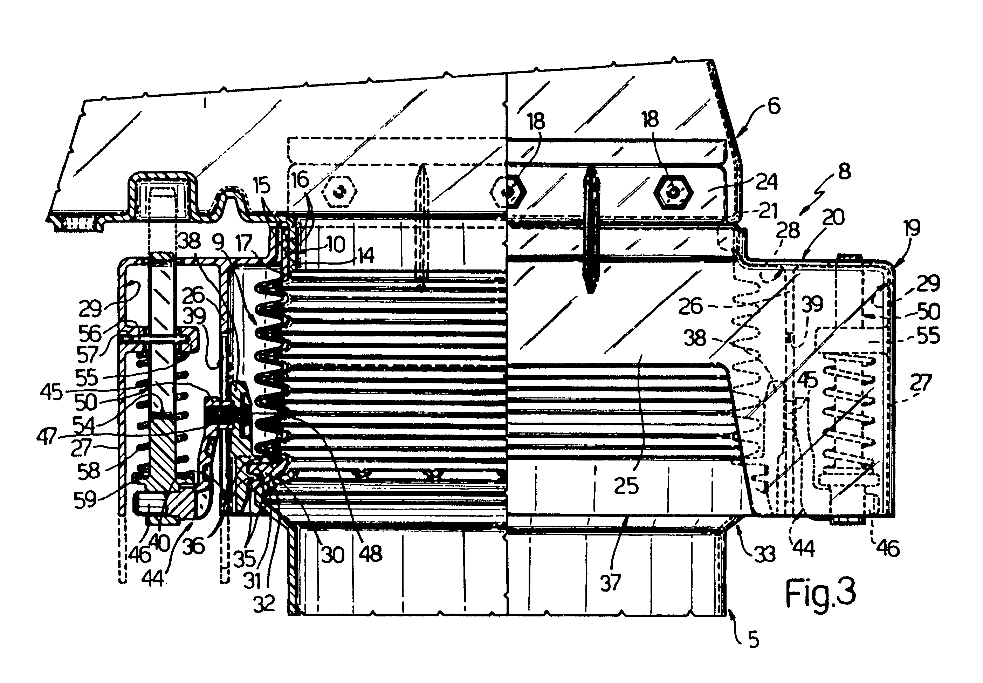

When cab 3 is set to the normal position shown in Fig. 1, bottom edge 30 of bellows 9 cooperates with filter inlet 5. Contact and sealing are assured by springs 58, which, compressed between guide element 19, connected to snorkel 6, and flanges 59 of rods 50, push down supporting elements 44 and, consequently also, collar 37 and edge 30 of bellows 9. Relative displacement of frame 4 and cab 3, due to rolling vibration, is compensated for by greater or lesser compression of springs 58 in relation to the static load condition shown in Fig. 3, and results in relative displacement of rods 50 and guide element 19. Due to the manner in which cab 3 is secured to frame 4, said relative displacement substantially consists in vertical excursion and relative inclination, and is made possible by virtue of the design of openings 39 and the sliding connection of pins 56 and openings 54 of rods 50.

When cab 3 is tilted forward, edge 30 of bellows 9 is released from surface 32 of inlet 33 on filter 5, and bellows 9 extended by virtue of springs 58. The ultimate position of bellows 9, however, is controlled by virtue of it only being allowed to extend to a point wherein pins 45 of supporting elements 44 encounter the bottom edge of respective openings 39 and are arrested inside respective recesses 40.

Number 8′ in Fig.s 7 to 9 indicates a further embodiment of the device according to the present invention. For the sake of simplicity, parts identical or similar to those described in connection with device 8 will be referred to using the same numbering system plus a (′).

Device 8′ comprises a bellows 9′ identical to bellows 9 already described, and secured in the same way by top end 17′ to snorkel 6′, and by a bottom end 30′, designed to cooperate with inlet 33′ of filter 5′, to a collar 37′ having two lateral projections 38′ similar to projections 38.

Projections 38′ are fitted externally with respective pins 64 having, outwards of projections 38′, a first cylindrical portion 65, an annular groove 66 with a substantially semicircular profile, and a circular end head 67.

Device 8′ comprises a substantialy U-shaped guide element 19′ comprising a straight, L-section center portion 68, and two lateral arms 69 defining respective flat plates 70 perpendicular to the axis of center portion 68. Said plates 70 are located on opposite sides of bellows 9′, and present respective openings 39′, similar to openings 39, designed to receive cylindrical portions 65 of respective pins 64.

Device 8′ also comprises a metal wire spring 74 comprising a straight center portion 75, and two shaped lateral arms 76 extending along planes perpendicular to the axis of center portion 75 and outwards of lateral arms 69 of guide element 19′. Said arms 76 of spring 74 present respective bent end portions 77 substantially comprising a straight portion 78, and a hooked end portion 79. Said end portions 77 rest on grooves 66 of respective pins 64.

Center portion 68 of guide element 19′ presents two holes 80 for assembly to cab 3 or to integral snorkel 6′ via traditional rigid connecting means (not shown). Similarly, spring 74 presents two circular coils 81 at the connecting points between center portion 75 and arms 76, for assembly to cab 3 or snorkel 6′. Guide element 19′ and spring 74 may conveniently be assembled using a normal rigid bracket (not shown).

Device 8′ operates in the same way as device 8, except that, in this case, spring 74 is secured, not to guide element 19′, but directly to the cab (or snorkel) and acts directly on pins 64 integral with collar 37' and, therefore also, with bottom edge 30' of bellows 9'. The design of arms 76 of spring 74 and pins 64 ensures mutual contact in the various operating positions (the extreme positions are shown by the dot-and-dash line in Fig.8) and prevents spring 74 from being detached from pins 64. Openings 39' function in the same way as openings 39, and also present a recess 40' for housing pins 64 in the stop position provided for by spring 74, when the cab is tilted forward.

The advantages of devices 8 and 8' will be clear from the foregoing description. In particular, bellows 9 or 9' is guided into a precise position when the cab is tilted forward, thus eliminating any need for manual positioning of bottom edge 30 or 30' of bellows 9 or 9' in relation to inlet 33 of filter 5 when the cab is lowered back down.

To those skilled in the art it will be clear that changes may be made to device 8 or 8' as described and illustrated herein without, however, departing from the scope of the present invention.

## Claims

1. A device (8, 8') for connecting an air intake pipe (6, 6') to the air filter (5, 5') of a motor vehicle, said filter (5, 5') being supported by the vehicle frame (2), and said intake pipe (6, 6') being supported by the vehicle cab (3), designed to move, in relation to said frame (2), between a first normal operating position and a second forward-tilting position ; said device comprising a bellows type coupling (9, 9') connected at the top end to said intake pipe (6, 6'), and connectable at the bottom end (30, 30') to the inlet (33, 33') of said filter (5, 5') ; characterised by the fact that it comprises elastic means (58, 74) acting on said bottom end (30, 30') for maintaining contact between said bottom end (30, 30') and said inlet (33, 33') of said filter (5, 5') when said cab (3) is set to said first position ; and means (19, 19'), connected to said cab (3), for guiding said bottom end (30, 30'), and comprising means (40, 40') for determining a given stop position of said bottom end (30, 30'), by virtue of said elastic means (58, 74), when said cab is set to said second position.

2. A device as claimed in Claim 1, characterised by the fact that it comprises a rigid collar (37, 37') secured to said bottom end (30, 30') of said bellows type coupling, said collar comprising load transmission means and said elastic means (58, 74) acting on said load transmission means.

3. A device as claimed in Claim 2, characterised by the fact that said guide means (19, 19') comprise at least a pair of walls (26, 27) on either side of said bellows type coupling (9, 9') and having respective shaped openings (39, 39') ; said load transmission means comprising a pair of pins (45, 64) housed in sliding manner inside respective said openings (39, 39').

4. A device as claimed in Claim 3, characterised by the fact that said stop means comprise a pair of bottom recesses (40, 40') in said openings (39, 39'), designed to receive said pins (45, 64).

5. A device as claimed in Claim 3 or 4, characterised by the fact that said openings (39, 39') are slightly inclined vertically, and are widest at the top and bottom ends.

6. A device as claimed in one of the foregoing Claims from 3 to 5, characterised by the fact that said pins (45, 64) are integral with said collar (37, 37').

7. A device as claimed in one of the foregoing Claims from 3 to 6, characterised by the fact that said elastic means comprise a metal wire spring (74) rigidly secured to said cab (3) and having a pair of arms (76) acting on said pins.

8. A device as claimed in one of the foregoing Claims from 3 to 5, characterised by the fact that it comprises supporting means (44) defining, at one end, said pins (45) connected rigidly to said collar (37), and, at the opposite end, further respective pins (46) integral with respective rods (50) mounted in sliding manner inside said guide means (19).

9. A device as claimed in Claim 8, characterised by the fact that said elastic means comprise a pair of helical springs (58) wound about said pins and compressed between said guide means (19) and respective flanges (59) of said rods (50).

10. A device as claimed in Claim 8 or 9, characterised by the fact that said rods (50) are mounted in sliding manner inside a respective bush (55) integral with said guide means (19), and present a longitudinal opening (54) engaged by a transverse pin (56) integral with said bush (55).

11. A device as claimed in any one of the foregoing Claims, characterised by the fact that said guide means (19, 19') are rigidly connected to said intake pipe (6, 6').

## Patentansprüche

1. Vorrichtung (8, 8') zur Verbindung des Luftansaugrohres (6, 6') mit dem Luftfilter (5, 5') eines Kraftfahrzeugs, welcher Filter (5, 5') durch den Fahrzeugrahmen (2) abgestützt wird, während das Ansaugrohr (6, 6') durch die Fahrzeugkabine (3) abgestützt wird, die sich in Bezug auf den Rahmen (2) zwischen einer ersten normalen Betriebsposition und einer zweiten vorwärts gekippten Position bewegen kann, welche Vorrichtung ein balgförmiges Verbindungsstück (9, 9') umfaßt, das am oberen Ende mit dem Ansaugrohr (6, 6') verbunden ist und am unteren Ende (30, 30') mit dem Einlaß (33, 33') des Filters (5, 5') verbunden werden kann, dadurch **gekennzeichnet**, daß die Vorrichtung eine elastische Einrichtung (58, 74) aufweist, die auf das untere Ende (30, 30')

einwirkt und einen Kontakt aufrechterhält zwischen dem unteren Ende (30, 30') und dem Einlaß (33, 33') des Filters (5, 5') wenn die Kabine (3) in die erste Position bewegt ist, und daß eine Einrichtung (19, 19') vorgesehen ist, die mit der Kabine (3) verbunden ist und das untere Ende (30, 30') führt und Mittel (40, 40') zur Bestimmung einer vorgegebenen Anschlagposition des unteren Endes (30, 30') über die elastische Einrichtung (58, 74) beim Umstellen der Kabine in die zweite Position umfaßt.

2. Vorrichtung nach Anspruch 1, **gekennzeichnet** durch einen starren Kragen (37, 37'), der am unteren Ende (30, 30') des balgförmigen Verbindungsstücks befestigt ist und eine Lastübertragungseinrichtung aufweist, auf die die elastische Einrichtung (58, 74) einwirkt.

3. Vorrichtung nach Anspruch 2, dadurch **gekennzeichnet**, daß die Führungseinrichtung (19, 19') wenigstens zwei Wände (26, 27) auf beiden Seiten des balgförmigen Verbindungsstücks (9, 9') aufweist, und daß entsprechend geformte Öffnungen (39, 39') vorgesehen sind, welche Last die Übertagungseinrichtung zwei Stifte (45, 64) umfaßt, die gleitend in den Öffnungen (39, 39) liegen.

4. Vorrichtung nach Anspruch 3, dadurch **gekennzeichnet**, daß die Anschlageinrichtung zwei untere Ausnehmungen (40, 40') in den Öffnungen (39, 39') zur Aufnahme der Stifte (45, 64) umfaßt.

5. Vorrichtung nach Anspruch 3 oder 4, dadurch **gekennzeichnet**, daß die Öffnungen (39, 39') leicht in senkrechter Richtung geneigt sind und an den oberen und unteren Enden die größte Breite aufweisen.

6. Vorrichtung nach einem der vorhergehenden Ansprüche 3 bis 5, dadurch **gekennzeichnet**, daß die Stifte (45, 64) einstückig mit dem Kragen (37, 37') ausgebildet sind.

7. Vorrichtung nach einem der Ansprüche 3 bis 6, dadurch **gekennzeichnet**, daß die elastische Einrichtung eine Feder (74) aus Metalldraht umfaßt, die fest mit der Kabine (3) verbunden ist und zwei Arme (76) aufweist, die auf die Stifte einwirken.

8. Vorrichtung nach einem der Ansprüche 3 bis 5, **gekennzeichnet** durch eine Stützeinrichtung (44), die an einem Ende die Stifte (45) bildet, die fest mit dem Kragen (37) verbunden sind, und am gegenüberliegenden Ende weitere Stifte (46) aufweist, die einstückig mit Stangen (50) verbunden sind, die gleitend innerhalb der Führungseinrichtung (19) montiert sind.

9. Vorrichtung nach Anspruch 8, dadurch **gekennzeichnet**, daß die elastische Einrichtung zwei Schraubenfedern (58) umfaßt, die um die Stifte herumgewickelt und zwischen den Führungseinrichtungen (19) und den Flanschen der Stangen (50) vorgespannt ist.

10. Vorrichtung nach Anspruch 8 oder 9, dadurch **gekennzeichnet**, daß die Stangen (50) gleitend innerhalb entsprechender Buchsen (55) liegen, die einstückig mit der Führungseinrichtung (19) ausgebildet sind, und eine längsgerichtete Öffnung (54) bilden, in die ein Querstift (56) eingreift, der einstückig mit der Buchse (55) ausgebildet ist.

11. Vorrichtung nach einem der vorhergehenden Ansprüche, dadurch **gekennzeichnet**, daß die Führungseinrichtung (19, 19') starr mit dem Ansaugrohr (6, 6') verbunden ist.

## Revendications

1. Un dispositif (8, 8') destiné à relier une conduite (6, 6') d'admission d'air au filtre à air (5, 5') d'un véhicule à moteur, ledit filtre (5, 5') étant supporté par le cadre (2) de véhicule, et ladite conduite d'admission (6, 6') étant supportée par la cabine (3) du véhicule, destinée à se déplacer, par rapport audit cadre (2), entre une première position normale de fonctionnement et une deuxième position basculée vers l'avant; ledit dispositif comprenant un accouplement (9, 9') du type à soufflet relié à l'extrémité supérieure à ladite conduite d'admission (6, 6') et pouvant être relié à l'extrémité inférieure (30, 30') à l'entrée (33, 33') dudit filtre (5, 5'), caractérisé par le fait qu'il comprend des moyens élastiques (58, 74) agissant sur ladite extrémité inférieure (30, 30') pour maintenir un contact entre ladite extrémité inférieure (30, 30') et ladite entrée (33, 33') dudit filtre (5, 5') lorsque ladite cabine (3) est placée dans ladite première position ; et des moyens (19, 19'), reliés à ladite cabine (3), pour guider ladite extrémité inférieure (30, 30') et comprenant des moyens (40, 40') pour déterminer une position donnée d'arrêt de ladite partie inférieure (30, 30') par l'effet desdits moyens élastiques (58, 74) lorsque ladite cabine est placée dans ladite deuxième position.

2. Un dispositif selon la revendication 1, caractérisé par le fait qu'il comprend un collier rigide (37, 37') fixé sur ladite partie inférieure (30, 30') dudit accouplement du type à soufflet, ledit collier comprenant des moyens de transmission de charge et lesdits moyens élastiques (58, 74) agissant sur lesdits moyens de transmission de charge.

3. Un dispositif selon la revendication 2, caractérisé par le fait que lesdits moyens (19, 19') de guidage comprennent au moins une paire de parois (26, 27) sur chaque côté de l'accouplement (9, 9') du type à soufflet et comportant des orifices de formes respectives (39, 39') ; lesdits moyens de transmission de charge comprenant une paire de broches (45, 64) logées à coulissement à l'intérieur desdits orifices respectifs (39, 39').

4. Un dispositif selon la revendication 3, caractérisé par le fait que lesdits moyens d'arrêt comprennent une paire d'évidements inférieurs (40, 40') dans lesdits orifices (39, 39'), destinés à recevoir lesdites broches (45, 64).

5. Un dispositif selon la revendication 3 ou 4, caractérisé par le fait que lesdits orifices (39, 39') sont légèrement inclinés verticalement et sont plus larges aux extrémités supérieure et inférieure.

6. Un dispositif selon l'une des revendications précédentes 3 à 5, caractérisé par le fait que lesdites broches (45, 64) sont d'un seul tenant avec ledit collier (37, 37').

7. Un dispositif selon l'une des revendications précédentes 3 à 6, caractérisé par le fait que lesdits moyens élastiques comprennent un ressort (74) en fil métallique fixé de façon rigide sur ladite cabine (3) et comportant une paire de bras (76) agissant sur lesdites broches.

8. Un dispositif selon l'une des revendications précédentes 3 à 5, caractérisé par le fait qu'il comprend des moyens de support (44) définissant, à une extrémité, lesdites broches (45) reliées de façon rigide audit collier (37) et, à l'extrémité opposée, d'autres broches respectives (46) d'un seul tenant avec des tiges respectives (50) montées à coulissement à l'intérieur desdits moyens de guidage (19).

9. Un dispositif selon la revendication 8, caractérisé par le fait que lesdits moyens élastiques comprennent une paire de ressorts hélicoïdaux (58) enroulés autour desdites broches et comprimés entre lesdits moyens de guidage (19) et des plaques respectives (59) desdites tiges (50).

10. Un dispositif selon la revendication 8 ou 9, caractérisé par le fait que lesdites tiges (50) sont montées à coulissement à l'intérieur d'une douille respective (55) d'un seul tenant avec ledit moyen de guidage (19) et présentent un orifice longitudinal (54) engagé par une broche transversale (56) d'un seul tenant avec ladite douille (55).

11. Un dispositif selon l'une quelconque des revendications précédentes, caractérisé par le fait que lesdits moyens de guidage (19, 19') sont reliés de façon rigide à ladite conduite d'admission (6, 6').

Fig. 2

Fig.1

Fig.3

Fig.4

Fig.5

Fig.6

Fig.7

Fig.8

Fig.9